# EUROPEAN PATENT APPLICATION

(11) **EP 3 591 612 A1**
(43) Date of publication of application: **08.01.2020**
(21) Application number: 17903176.0
(22) Date of filing: 01.11.2017
(51) Int. Cl.: G06T 7/00, G01N 21/88

(54) **DEFECT DETECTION SYSTEM FOR AIRCRAFT COMPONENT AND DEFECT DETECTION METHOD FOR AIRCRAFT COMPONENT**

(30) Priority: 27.03.2017 JP 2017061591
(71) Applicant: Mitsubishi Heavy Industries, Ltd., Chiyoda-ku Tokyo 1008332 (JP); Soinn Inc., Tokyo 1940004 (JP)
(72) Inventor: KONISHI, Kozaburo, Tokyo 108-8215 (JP); OKAMOTO, Motoko, Tokyo 108-8215 (JP); HASEGAWA, Osamu, Tokyo 1940004 (JP)
(74) Representative: Henkel & Partner mbB
(86) International application number: PCT/JP2017/039558
(87) International publication number: WO 2018/179559

(57) **Abstract**

The purpose of the present invention is to appropriately detect a defect of an aircraft component. A defect detection system has: an original image acquisition unit (20) for acquiring an original image; an image processing unit (22) for extracting a defect candidate area from the original image on the basis of a luminance of an image in the original image, and calculating a characteristic amount of the defect candidate area on the basis of a difference in luminance between the defect candidate area and a peripheral area thereof; a characteristic amount range setting unit (24) for associating the characteristic amount calculated by the image processing unit (22) for a learning original image from which a defect part is detected in advance and information relating to the defect part, and setting a defect characteristic amount range and a non-defect characteristic amount range; and a defect detection unit (26) for determining, on the basis of the characteristic amount calculated by the image processing unit (22) with respect to a determination original image from which the defect part is not detected, the defect characteristic amount range, and the non-defect characteristic amount range, whether the defect candidate area in the determination original image is the defect part.

## Description

### Field

The present invention relates to a defect detection system for an aircraft component and a defect detection method for an aircraft component.

### Background

In the related art, a surface inspection for detecting a defect (flaw) on a surface of an aircraft component is performed by visually inspecting or examining by touching an actual component by an operator. In detecting an internal defect of an aircraft component, for example, a nondestructive inspection such as an ultrasonic flaw inspection is performed by an operator. For example, Patent Literature 1 discloses a technique of performing image processing on an image of a surface of a product to make a quality assessment of the product based on the image subjected to the image processing.

### Citation List

### Patent Literature

Patent Literature 1: Japanese Patent No. 5520908 Summary

### Technical Problem

However, in an inspection performed by a person, there is variation in detection accuracy for a defect and a time required for detection. Also in a case of detection using an image subjected to image processing, there is room for improvement in improving the detection accuracy. Thus, there is a demand for a technique of detecting a defect more appropriately and shortening a detection time for a defect in detecting a defect of an aircraft component.

The present invention is made for solving the problems described above, and an object of the invention is to provide a defect detection system for aircraft a component and a defect detection method for aircraft a component that can appropriately detect a defect and shorten a detection time for a defect.

### Solution to Problem

To solve the problems described above and achieve the object, a defect detection system for an aircraft component according to the present disclosure is a defect detection system for an aircraft component to detect a defect of the aircraft component as an object. The defect detection system includes an original image acquisition unit configured to acquire an original image which is an image of the object including an image of a defect point; an image processing unit configured to extract, from the original image, a defect candidate region which is a region to be a candidate for the defect point based on luminance of the image in the original image, and calculate a feature amount of the defect candidate region based on a difference in luminance between the defect candidate region and surrounding regions; a feature amount range setting unit configured to associate the feature amount calculated by the image processing unit for an original image for learning in which a defect point is detected in advance, with information about the defect point to set a range of a defect feature amount which is a range of the feature amount for determining a region to be the defect or a range of a non-defect feature amount which is a range of the feature amount for determining a region not to be the defect; and a defect detection unit configured to determine, based on the feature amount calculated by the image processing unit for a target original image in which a defect point is not detected yet, the range of the defect feature amount, and the range of the non-defect feature amount, whether the defect candidate region in the target original image is a defect point.

The defect detection system learns the range of the feature amount to be a standard of the defect in advance, and detects the defect using the original image based on a learning result thereof, so that variation in detection accuracy can be suppressed. The defect detection system limits a calculation target for the feature amount to only a defect candidate region, so that a load of detecting a defect can be suppressed, and a detection time can be shortened. Accordingly, the detection system can appropriately detect the defect of the aircraft component.

In the defect detection system, it is preferable that the image processing unit includes a candidate region extraction unit configured to extract, as a candidate region for the defect, a region having variance of luminance with respect to surrounding regions that is equal to or larger than a predetermined variance value from among regions in the original image; a defect candidate region extraction unit configured to remove a candidate region forming a predetermined shape determined in advance from among candidate regions, and extract, as the defect candidate region, the candidate region that is not removed; and a feature amount calculation unit configured to calculate a feature amount of the defect candidate region based on a difference in luminance between the defect candidate region and the surrounding regions. The detection system can detect the defect of the aircraft component more appropriately by suppressing an increase in a calculation amount for defect detection more suitably, and shortening the detection time.

In the defect detection system, it is preferable that the defect candidate region extraction unit determines whether a plurality of the candidate regions continuously arranged form a circular shape using Hough transform, and removes the candidate regions forming the circular shape. The detection system can detect the defect of the aircraft component more appropriately by suppressing an increase in the calculation amount for defect detection more suitably, and shortening the detection time.

In the defect detection system, it is preferable that the feature amount calculation unit calculates the feature amount as a variation amount of luminance in the defect candidate region and the surrounding regions. The detection system can appropriately improve accuracy in defect detection by determining the defect based on the feature amount.

In the defect detection system, it is preferable that the feature amount calculation unit calculates a HOG feature amount of the defect candidate region as the feature amount. The detection system can appropriately improve accuracy in defect detection by determining the defect based on the HOG feature amount.

In the defect detection system, it is preferable that the defect detection unit includes a feature amount acquisition unit configured to acquire a target feature amount which is the feature amount of the target original image; a feature amount range acquisition unit configured to acquire the range of the defect feature amount and the range of the non-defect feature amount from the feature amount range setting unit; and a defect determination unit configured to determine whether the defect candidate region is the defect point based on a defect difference value which is a difference value between the target feature amount and the range of the defect feature amount, and a non-defect difference value which is a difference value between the target feature amount and the range of the non-defect feature amount. The defect detection system determines the defect based on the difference value of the target feature amount with respect to the range of the defect feature amount calculated in advance, so that accuracy in defect detection can be improved more appropriately.

In the defect detection system, it is preferable that, when a ratio of the defect difference value to the non-defect difference value is equal to or smaller than a predetermined threshold, the defect determination unit determines that the defect candidate region is the defect point. The defect detection system determines the defect based on the ratio of the defect difference value to the non-defect difference value, so that accuracy in defect detection can be improved more appropriately.

In the defect detection system, it is preferable that the predetermined threshold is a value of larger than 1. The defect detection system causes the threshold to be larger than 1 to increase a possibility that the region is determined to be the defect in detecting the defect, and can improve accuracy in defect detection more appropriately.

It is preferable that the defect detection system further includes an image display control unit configured to cause a display unit to display a determination image obtained by adding a mark to the original image at a point that is determined to be the defect point by the defect detection unit. The defect detection system displays the image obtained by adding the mark to the point that is determined to be the defect, so that an operator can easily visually recognize the defect point.

In the defect detection system, it is preferable that the image display control unit causes the determination image to be displayed such that display of the mark is different depending on a ratio of the defect difference value to the non-defect difference value. The defect detection system varies display of the mark depending on the ratio, so that the point that may be the defect with high possibility can be easily visually recognized by an operator.

It is preferable that the defect detection system further includes an original image creation unit configured to take an image of a surface of the object to create the original image. The defect detection system can appropriately detect the defect on the surface of the object by performing defect detection using the original image.

It is preferable that the defect detection system further includes an original image creation unit configured to detect an internal state of the object to create the original image based on detection data. Accordingly, the defect detection system can appropriately detect the internal defect of the object.

To solve the problems described above and achieve the object, a defect detection method for an aircraft component according to the present disclosure is a defect detection method for an aircraft component to detect a defect of the aircraft component as an object. The defect detection method includes an original image acquisition step of acquiring an original image which is an image of the object including an image of a defect point; an image processing step of extracting, from the original image, a defect candidate region which is a region to be a candidate for the defect point based on luminance of the image in the original image, and calculating a feature amount of the defect candidate region based on a difference in luminance between the defect candidate region and surrounding regions; a feature amount range setting step of associating the feature amount calculated at the image processing step for an original image for learning in which a defect point is detected in advance, with information about the defect point to set a range of a defect feature amount which is a range of the feature amount for determining a region to be the defect or a range of a non-defect feature amount which is a range of the feature amount for determining a region not to be the defect; and a defect detection step of determining, whether the defect candidate region corresponding to the feature amount is a defect point based on the feature amount calculated at the image processing step for a target original image in which a defect point is not detected yet, the range of the defect feature amount, and the range of the non-defect feature amount. With the defect detection method, the defect of the aircraft component can be appropriately detected.

### Advantageous Effects of Invention

According to the present invention, a defect of an aircraft component can be appropriately detected.

### Brief Description of Drawings

FIG. 1 is a schematic diagram of a defect detection system according to a first embodiment.
FIG. 2 is a schematic block diagram of a control unit according to the first embodiment.
FIG. 3 is a diagram illustrating an example of an original image.
FIG. 4 is a diagram for explaining a candidate region.
FIG. 5 is a diagram illustrating an example of a candidate extraction image.
FIG. 6 is a diagram for explaining a defect candidate extraction region.
FIG. 7 is a diagram for explaining the defect candidate extraction region.
FIG. 8 is a diagram illustrating an example of a defect candidate extraction image.
FIG. 9 is a flowchart for explaining calculation processing for a feature amount performed by an image processing unit.
FIG. 10 is a diagram for explaining a range of a defect feature amount and a range of a non-defect feature amount.
FIG. 11 is a flowchart for explaining setting processing for the range of the defect feature amount and the range of the non-defect feature amount.
FIG. 12 is a diagram for explaining defect determination.
FIG. 13 is a flowchart for explaining defect detection processing.
FIG. 14 is a diagram illustrating an example of a determination image.
FIG. 15 is a diagram illustrating another example of the determination image.
FIG. 16 is a schematic block diagram of a control unit according to a second embodiment.

### Description of Embodiments

The following describes preferred embodiments of the present invention in detail with reference to the attached drawings. The present invention is not limited to the embodiments. In a case in which there are a plurality of embodiments, the embodiments may be combined to implement the present invention.

### First embodiment

### Entire configuration

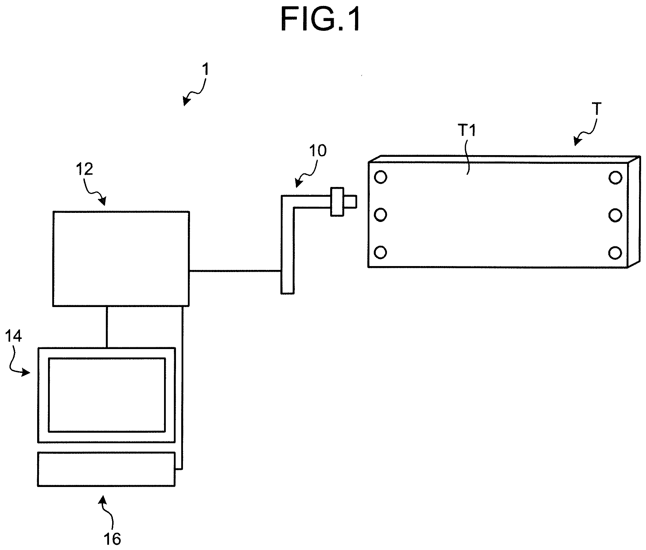

FIG. 1 is a schematic diagram of a defect detection system according to a first embodiment. As illustrated in FIG. 1, a defect detection system 1 according to the first embodiment is a system that detects a defect of an object T. The object T is an aircraft component. The defect indicates an unacceptable flaw deviating from a standard set in advance among flaws (discontinuities) of the object T. That is, the defect indicates the flaw of the object T.

As illustrated in FIG. 1, the defect detection system 1 is a computer including artificial intelligence mounted thereon, and includes an original image creation unit 10, a control unit 12, a display unit 14, and an input unit 16. In the defect detection system 1, an original image A1 of the object T is created by the original image creation unit 10, and the original image A1 is subjected to image processing performed by the control unit 12 to detect the defect of the object T.

The original image creation unit 10 creates the original image A1 of the object T. The original image A1 is an image of the object T including an image of a defect point. In the first embodiment, the original image creation unit 10 includes a camera, and takes an image of a surface T1 of the object T to create the original image A1 of the object T. That is, the original image A1 according to the first embodiment is a taken image of the surface T1 of the object T. In the present embodiment, the original image creation unit 10 takes an image of each point of the surface T1 while moving above the surface T1 of the object T under control by the control unit 12, and creates a plurality of the original images A1. Alternatively, the original image creation unit 10 may create one original image A1 obtained by taking the image of the entire object T. The object T according to the present embodiment is a flat plate member such as an external wall of an aircraft, for example. Thus, in a case in which there is a defect on the surface T1 of the object T, luminance of the defect point is different from luminance of a point other than the defect in the original image A1. However, the object T is not limited to such a flat plate member, and may have an optional shape such as a curved plate member, for example. Also in such a case, luminance of the defect point is different from luminance of the point other than the defect in the original image A1.

The control unit 12 is, for example, a central processing unit (CPU), and controls an operation of the defect detection system 1. A configuration of the control unit 12 will be described later. The display unit 14 is, for example, a monitor, and displays various images such as the original image A1 under control by the control unit 12. The input unit 16 is, for example, a mouse or a keyboard, which is a device through which an operator gives a command or inputs information to the control unit 12.

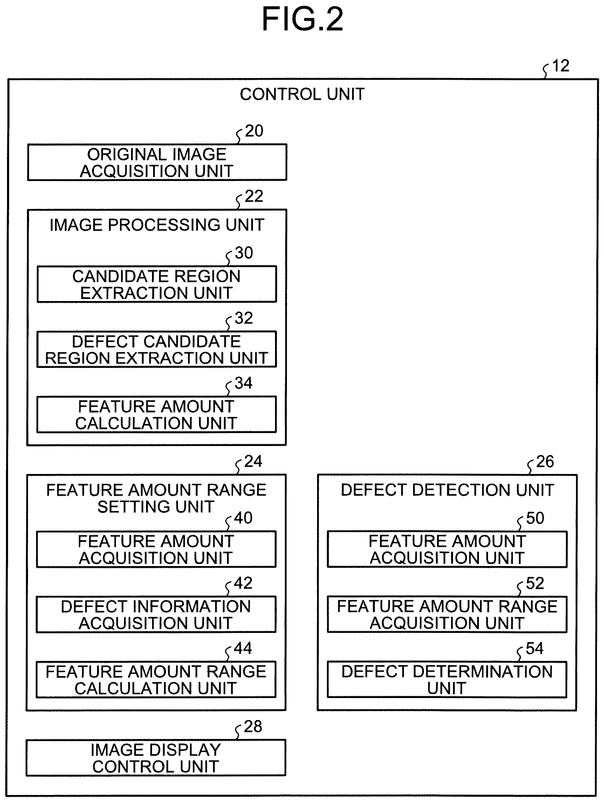

FIG. 2 is a schematic block diagram of a control unit according to the first embodiment. As illustrated in FIG. 2, the control unit 12 includes an original image acquisition unit 20, an image processing unit 22, a feature amount range setting unit 24, a defect detection unit 26, and an image display control unit 28 for causing the display unit 14 to display various images. The control unit 12 performs image processing on an original image for learning with the image processing unit 22, and learns a standard for determining the defect of the object T in advance with the feature amount range setting unit 24 using content of the image processing. The original image for learning is the original image A1 of the object T the defect point of which is detected in advance. The control unit 12 performs image processing on a target original image with the image processing unit 22, and applies the content of image processing to the standard learned in advance to detect the defect of the object T with the defect detection unit 26. The target original image is the original image A1 of the object T the defect point of which is not detected yet, that is, the object T the defect of which will be detected. The following specifically describes processing performed by the respective units.

### Original image acquisition unit

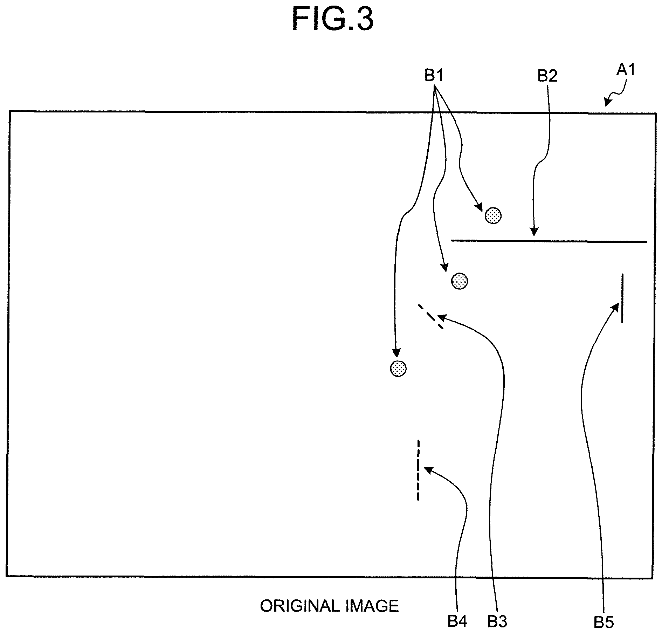

FIG. 3 is a diagram illustrating an example of the original image. The original image acquisition unit 20 acquires the original image A1 from the original image creation unit 10. The original image acquisition unit 20 causes the display unit 14 to display the original image A1 as illustrated in FIG. 3 via the image display control unit 28 by a command from the operator, for example. The original image A1 is an image obtained by causing a plurality of pixels P arranged in a two-dimensional matrix to display a set color. In the example of FIG. 3, points B1 to B5 are reflected in the original image A1. In the original image A1, luminance of the points B1 to B5 is different from that of the other points. The points B1 to B5 are regions to be candidates for the defect point in the original image A1. As illustrated in FIG. 3, the point B1 is a circular region. Each of the points B2 and B5 is one linear region. The points B3 and B4 are regions in which a plurality of linear regions are arranged in a straight line while being separated from each other. The point B1 to the point B5 are regions corresponding to a plurality of pixels displayed by the pixels P. In this case, the luminance is a gradation value of the pixel, for example, any of integer values from 0 to 255.

### Image processing unit

As illustrated in FIG. 2, the image processing unit 22 includes a candidate region extraction unit 30, a defect candidate region extraction unit 32, and a feature amount calculation unit 34. The image processing unit 22 extracts a defect candidate region from the original image based on the luminance of the image in the original image A1. The defect candidate region is a region to be a candidate of the defect point, which will be described in detail later. The image processing unit 22 then calculates a feature amount of the defect candidate region based on a difference in luminance between the defect candidate region and surrounding regions thereof. The image processing performed by the image processing unit 22 is common to the original image for learning and the target original image. Thus, in the following description about the image processing unit 22, the image processing is described to be performed on the original image A1 without distinguishing the original image for learning from the target original image.

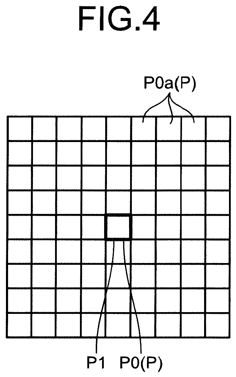

FIG. 4 is a diagram for explaining the candidate region. The candidate region extraction unit 30 extracts a candidate region P1 as a region to be a candidate for the defect. Specifically, the candidate region extraction unit 30 selects, as one region, one pixel P0 from among the pixels P displaying the original image A1. The candidate region extraction unit 30 then extracts surrounding pixels P0a as peripheral pixels P around the pixel P0 as illustrated in FIG. 4. In the example of FIG. 4, the peripheral pixels P0a are all of the pixels P surrounded by regions separated from the pixel P0 in four directions by a distance corresponding to 4 pixels. The candidate region extraction unit 30 calculates a variance value of luminance of the pixel P0 and the peripheral pixels P0a (the sum total thereof is 81). At the time of calculating the variance value of luminance, the candidate region extraction unit 30 calculates an average value of luminance of the extracted pixels P (the pixel P0 and the peripheral pixels P0a). The candidate region extraction unit 30 then calculates a square value obtained by squaring, for each pixel P, a difference between the luminance of the pixel P and the average value of luminance, and adds up square values for all the pixels P. The candidate region extraction unit 30 calculates the variance value of luminance by dividing a total value by the number of pixels P. In a case in which the variance value of luminance is equal to or larger than a predetermined variance value determined in advance, the candidate region extraction unit 30 extracts the pixel P0 as the candidate region P1. The candidate region extraction unit 30 selects all the pixels P in the original image A1 as the pixel P0 to perform the same processing, and extracts the candidate region P1. The luminance of the defect point is different from the luminance of a surrounding region in many cases, and the variance value of luminance tends to be high. By causing the pixel P having a high variance value of luminance to be the candidate region P1, the candidate region extraction unit 30 can appropriately extract a region to be the candidate for the defect. The predetermined variance value to be a threshold for the candidate region P1 is, for example, 13.3, but is not limited thereto, and can be an optional value. In the example of FIG. 3, the peripheral pixels P0a are the pixels P surrounded by the regions separated from the pixel P0 in four directions by a distance corresponding to 4 pixels, but the positions and the number of the peripheral pixels P0a are optional so long as the peripheral pixel P0a are the pixels P around the pixel P0. In the present embodiment, the candidate region P1 is extracted based on the luminance, but the candidate region P1 may be extracted based on color information other than the luminance. In this case, examples of the color information include a hue and the like, which is information other than the luminance, that is, brightness of the pixel P. For example, in a case in which the original image A1 has a color histogram for each region (a color is different for each region), the candidate region P1 may be extracted based on the color histogram. For example, the object T may include a region of a color different from that of the surface T1 in some cases, such as a case in which protective tape having a color (blue) different from that of the surface T1 is attached thereto. In such a case, a color pattern of the region of the different color can be grasped in advance, and it is obvious that this color hardly appears in the other regions. Thus, in such a case, the candidate region extraction unit 30 stores the different color of the region in advance. The candidate region extraction unit 30 then compares the color of the pixel P with the stored color. If a difference between the color of the pixel P and the stored color is equal to or smaller than a predetermined threshold (for example, if a difference between a value of the hue of the pixel P and a stored hue is equal to or smaller than the threshold), the candidate region extraction unit 30 determines that the region occupied by the pixel P is the protective tape and the like, not the defect, and excludes the pixel P from the candidate region P1. However, this processing is merely an example.

In this way, the candidate region extraction unit 30 extracts, as the defect candidate region P1, the region (pixel P0) having variance of luminance with respect to the surrounding regions (surrounding pixels P0a) that is equal to or larger than the predetermined variance value from among the regions (pixels P0) in the original image A1. In a case in which the variance of luminance is equal to or larger than the predetermined variance value, the candidate region extraction unit 30 determines the region to be the candidate for the defect point due to a large change in luminance, and causes the region to be the candidate region P1. In this case, the candidate region P1 is a region corresponding to one pixel. However, the region is not limited to a region corresponding to one pixel, and may be a region corresponding to a plurality of pixels, that is, a region including a plurality of pixels P. In other words, the region may be one region in a case of partitioning the original image A1 into a plurality of regions herein. The candidate region extraction unit 30 does not necessarily extract the candidate region P1 based on the variance of luminance so long as the candidate region P1 is extracted based on the luminance of the region (pixel P0) and the surrounding region (surrounding pixel P0a). For example, the candidate region extraction unit 30 may calculate a difference in luminance between the region (pixel P0) and the surrounding regions (surrounding pixels P0a), and if the difference in luminance is equal to or larger than a predetermined value, the candidate region extraction unit 30 may extract the region as the candidate region P1. The candidate region extraction unit 30 may extract the defect candidate region P1 by detecting an edge (outline) of the region using a Sobel filter, for example.

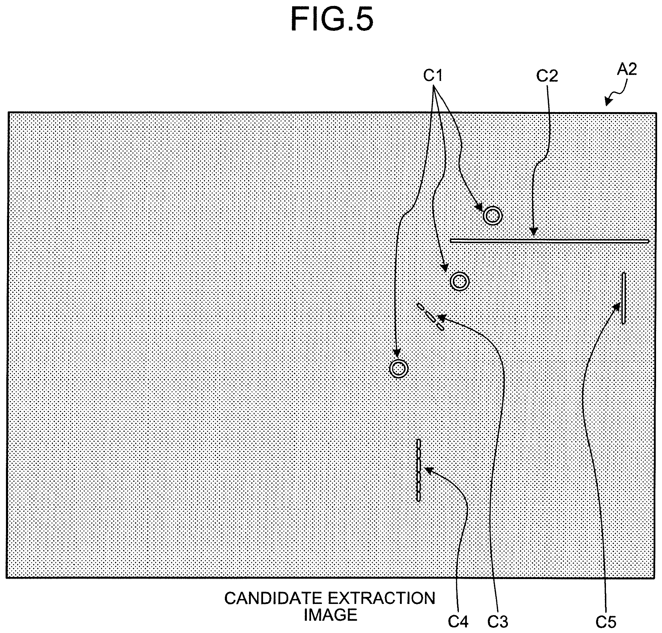

FIG. 5 is a diagram illustrating an example of a candidate extraction image. The candidate region extraction unit 30 causes, via the image display control unit 28, the display unit 14 to display a candidate extraction image A2 obtained by extracting the candidate region P1 to be displayed. As illustrated in FIG. 5, in the candidate extraction image A2, high-luminance points C1 to C5 are reflected on a low-luminance background. The point C1 is a region in which a plurality of pixels P extracted as the candidate regions P1 are continuous in a circular shape, and corresponds to an outer circumference of a point B1 in the original image A1. The points C2 and C5 are regions in which a plurality of pixels P extracted as the candidate regions P1 are continuous in a linear shape, and correspond to the points B2 and B5 in the original image A1. The points C3 and C4 are regions in which regions including a plurality of continuous pixels P extracted as the candidate regions P1 are arranged in a linear shape while being separated from each other. The points C3 and C4 correspond to the points B3 and B4 in the original image A1. However, the candidate region extraction unit 30 does not necessarily causes the candidate extraction image A2 to be displayed.

Next, the following describes the defect candidate region extraction unit 32. The defect candidate region extraction unit 32 removes candidate regions P1 forming a predetermined shape determined in advance from among the candidate regions P1, and extracts, as a defect candidate region P2, the candidate region P1 that is not removed. That is, the defect candidate region P2 is part of the candidate regions P1 selected from the candidate regions P1, and each defect candidate region P2 is one pixel P (a region corresponding to one pixel). Specifically, the defect candidate region extraction unit 32 detects continuous candidate regions P1 from the candidate regions P1. In this case, "continuous" means that the pixels P as the candidate regions P1 are adjacent to each other. If it is determined that the continuous candidate regions P1 make a predetermined shape as a whole, the defect candidate region extraction unit 32 determines the continuous candidate regions P1 not to be the defect candidate region P2, and removes the continuous candidate regions P1. The predetermined shape is, for example, a circular shape, a rectangular shape, a triangular shape, and a polygonal shape, and has a length larger than a predetermined length. By removing the candidate regions P1 having the predetermined shape in this way, the defect candidate region extraction unit 32 removes, from the candidate for the defect point (defect candidate region P2), a point at which a member such as a rivet, a window frame, and a seal is arranged. However, the predetermined shape is not limited thereto, and may be optionally set. In the present embodiment, the defect candidate region extraction unit 32 determines whether the continuous candidate regions P1 constitute a circular shape using Hough transform, and removes the candidate regions P1 constituting a circular shape. For example, a rivet used for an aircraft component has a circular shape, so that the defect candidate region extraction unit 32 can extract the circular shape using Hough transform to remove the rivet from the point as the candidate for the defect.

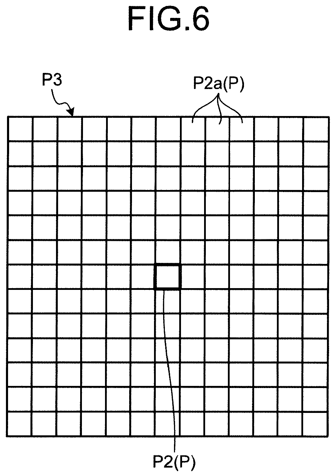

FIG. 6 is a diagram for explaining a defect candidate extraction region. As illustrated in FIG. 6, after extracting the defect candidate region P2, the defect candidate region extraction unit 32 extracts, from the original image A1, the defect candidate region P2 and the pixels P in the surrounding regions thereof as a defect candidate extraction region P3. That is, the defect candidate region extraction unit 32 extracts, as the defect candidate extraction region P3, the pixel P corresponding to the defect candidate region P2 and surrounding pixels P2a as the pixels P around the pixel P. Thus, the defect candidate extraction region P3 is a region including a plurality of pixels P. In the example of FIG. 6, the surrounding pixel P2a is the pixel P surrounded by regions separated from the pixel P corresponding to the defect candidate region P2 in four directions by a distance corresponding to 6 pixels, and the defect candidate extraction region P3 is a region including 169 pixels P in total. However, the positions and the number of the surrounding pixels P2a are optional so long as the surrounding pixels P2a are the pixels P around the pixel P, and the number of the pixels P included in the defect candidate extraction region P3 is optional so long as the defect candidate extraction region P3 includes the pixel P corresponding to the defect candidate region P2 and the surrounding pixels P2a. For example, in a case in which the defect candidate region P2 is constituted of a plurality of pixels, the defect candidate region extraction unit 32 does not necessarily extract the defect candidate extraction region P3 so long as the defect candidate region P2 is extracted.

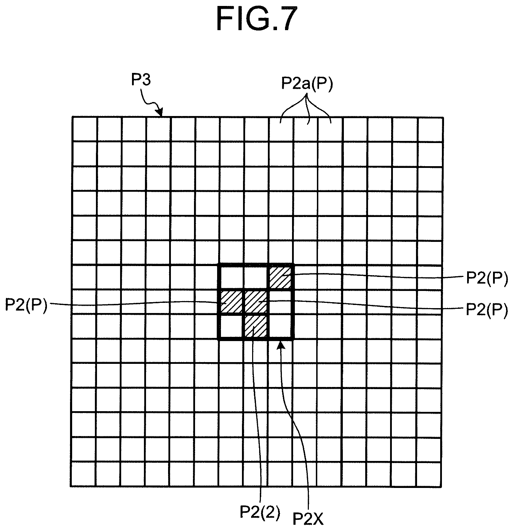

FIG. 7 is a diagram for explaining the defect candidate extraction region. As illustrated in FIG. 7, in a case in which the defect candidate regions P2 are continuous (adjacent to each other), the defect candidate region extraction unit 32 extracts a rectangular region P2X including all of the continuous defect candidate regions P2. The defect candidate region extraction unit 32 then extracts, as the defect candidate extraction region P3, all of the pixels P within the region P2X and the surrounding pixels P2a thereof. In this case, "the defect candidate regions P2 are continuous" means a case in which the pixels P being in contact with each other at least at sides or at apexes thereof are present in a continuous manner as illustrated in FIG. 7.

In this way, the defect candidate region extraction unit 32 extracts the defect candidate extraction region P3 after extracting the defect candidate region P2. Due to this, the defect candidate region extraction unit 32 can enlarge the region as the candidate for the defect, so that accuracy in defect detection can be enhanced.

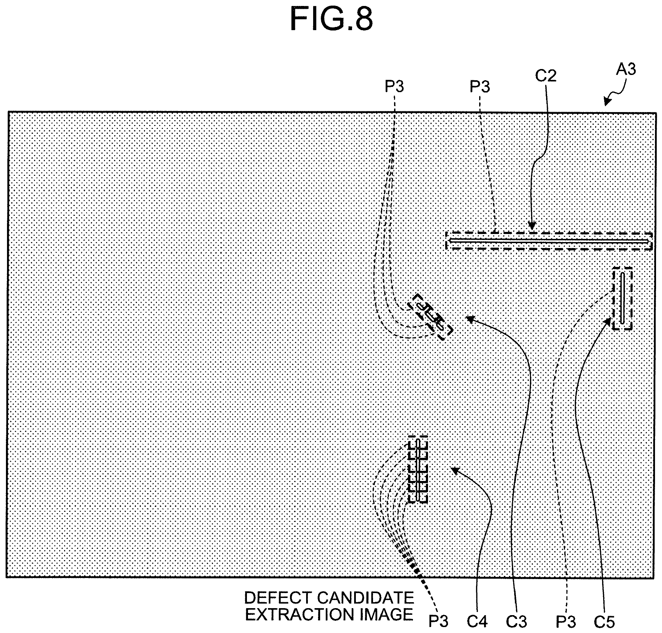

FIG. 8 is a diagram illustrating an example of a defect candidate extraction image. The defect candidate region extraction unit 32 causes, via the image display control unit 28, the display unit 14 to display a defect candidate extraction image A3 obtained by extracting the defect candidate region P2. As illustrated in FIG. 8, in the defect candidate extraction image A3, high-luminance points C2 to C5 are reflected on a low-luminance background. The point C1 reflected in the candidate extraction image A2 is removed because the point C1 is constituted of the candidate region P1 having a circular shape, and is not reflected in the defect candidate extraction image A3. The defect candidate extraction region P3 is extracted for each group of the continuous defect candidate regions P2. Thus, one defect candidate extraction region P3 is extracted for each of the points C2 and C5 at which the defect candidate regions P2 (pixels) are continuous. On the other hand, for each of the points C3 and C4 at which the defect candidate regions P2 (pixels) are discontinuous, a plurality of defect candidate extraction regions P3 are extracted, the number of the defect candidate extraction regions P3 corresponding to the number of the continuous defect candidate regions P2. However, the defect candidate region extraction unit 32 does not necessarily cause the defect candidate extraction image A3 to be displayed.

The image processing unit 22 may extract the defect candidate region P2 irrespective of the above description so long as the defect candidate region P2 is extracted based on the luminance of the image in the original image A1, that is, the luminance of the pixel P. For example, the image processing unit 22 may cause the extracted candidate region P1 to be the defect candidate region P2 as it is without excluding the candidate regions P1 forming a predetermined shape from the extracted candidate regions P1. For example, the image processing unit 22 does not necessarily include the candidate region extraction unit 30, and may exclude the region having a predetermined shape from the regions (pixels P) in the original image A1 to cause the rest of the regions to be the defect candidate regions P2.

Next, the following describes the feature amount calculation unit 34. The feature amount calculation unit 34 calculates a feature amount of the defect candidate extraction region P3 based on a difference in luminance between the pixels P in the defect candidate extraction region P3. In other words, the feature amount calculation unit 34 calculates the feature amount of the defect candidate region P2 based on a difference in luminance between the defect candidate region P2 and the surrounding region (surrounding pixel P2a) thereof. The feature amount calculation unit 34 calculates the feature amount for all of the defect candidate extraction regions P3. That is, in the example of FIG. 8, the feature amount calculation unit 34 calculates the feature amount for the respective defect candidate extraction regions P3 at the point C2 to the point C5. The feature amount is an intensity parameter of luminance indicating a difference value of luminance for each pixel P in the defect candidate extraction region P3. Specifically, the feature amount is a parameter indicating a variation amount of luminance in the defect candidate extraction region P3, that is, the defect candidate region P2 and the surrounding regions thereof. In a case in which the feature amount is large, a difference in luminance of each pixel in the defect candidate extraction region P3 is increased, and in a case in which the feature amount is small, a difference in luminance of the pixel P in the defect candidate extraction region P3 is reduced (difference in luminance becomes nearly uniform). Specifically, the feature amount calculation unit 34 calculates a HOG feature amount (HOG (Histograms of Oriented Gradient) feature amount) of the defect candidate extraction region P3 as the feature amount of the defect candidate extraction region P3. The feature amount calculation unit 34 calculates gradient intensity of luminance of the pixel P in the defect candidate extraction region P3 for each direction of intensity gradient of luminance, and calculates the feature amount (HOG feature amount) of the defect candidate extraction region P3 based on the gradient intensity of luminance for each gradient direction. The HOG feature amount calculated for one defect candidate extraction region P3 includes a plurality of types of values (parameters) calculated for each dimension. However, the feature amount calculation unit 34 does not necessarily calculate the HOG feature amount as the feature amount. For example, the feature amount calculation unit 34 may calculate a difference in luminance between the pixels P in the defect candidate extraction region P3, and calculate the difference value as the feature amount of the defect candidate extraction region P3. In a case of not using the HOG feature amount, the feature amount calculation unit 34 may cause the feature amount calculated for one defect candidate extraction region P3 to be one type of value (parameter).

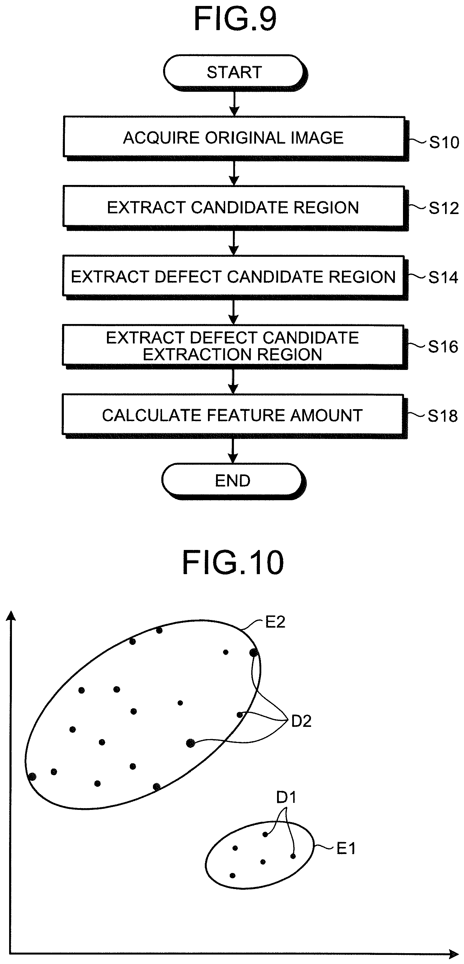

As described above, the image processing unit 22 performs image processing on the original image A1, and calculates the feature amount of the defect candidate extraction region P3. The following describes a procedure of calculation processing (image processing step) for the feature amount described above based on a flowchart. FIG. 9 is a flowchart for explaining calculation processing for the feature amount performed by the image processing unit. In a case of performing image processing, as illustrated in FIG. 9, first, the original image acquisition unit 20 acquires the original image A1 (Step S10). The image processing unit 22 then extracts the candidate region P1 with the candidate region extraction unit 30 (Step S12). Specifically, the candidate region extraction unit 30 extracts, as the candidate region P1, the region (pixel P) having variance of luminance with respect to the surrounding regions (surrounding pixels P0a) that is equal to or larger than the predetermined variance value from among the regions (pixels P) in the original image A1.

After extracting the candidate region P1, the image processing unit 22 extracts the defect candidate region P2 with the defect candidate region extraction unit 32 (Step S14). Specifically, the defect candidate region extraction unit 32 removes the candidate region P1 having the predetermined shape determined in advance, and extracts, as the defect candidate region P2, the candidate region P1 that is not removed. After extracting the defect candidate region P2, the image processing unit 22 extracts the defect candidate extraction region P3 with the defect candidate region extraction unit 32 (Step S16). Specifically, the defect candidate region extraction unit 32 extracts, as the defect candidate extraction region P3, the defect candidate region P2 and the pixels P in the surrounding regions thereof.

After extracting the defect candidate extraction region P3, the image processing unit 22 calculates the feature amount of the defect candidate extraction region P3 with the feature amount calculation unit 34 (Step S18). The feature amount calculation unit 34 calculates the feature amount of the defect candidate extraction region P3 based on a difference in luminance between the pixels P in the defect candidate extraction region P3. The feature amount calculation unit 34 calculates the feature amount for all of the extracted defect candidate extraction region P3. This processing performed by the image processing unit 22 ends when the feature amount is calculated. As described above, the calculation processing for the feature amount is the same for the original image for learning and the target original image.

### Feature amount range setting unit

Next, the following describes the feature amount range setting unit 24 illustrated in FIG. 2. With an algorithm utilizing artificial intelligence, the feature amount range setting unit 24 associates information about the defect point with the feature amount calculated by the image processing unit 22 for the original image for learning, and sets a range of a defect feature amount and a range of a non-defect feature amount. The range of the defect feature amount is a numerical range of the feature amount for determining the defect, and the range of the non-defect feature amount is a numerical range of the feature amount for determining a non-defect. That is, the feature amount range setting unit 24 sets the range of the defect feature amount and the range of the non-defect feature amount to be a standard for defect determination for the object T using the original image for learning of the object T the defect point of which is known in advance. Specifically, as illustrated in FIG. 2, the feature amount range setting unit 24 includes a feature amount acquisition unit 40, a defect information acquisition unit 42, and a feature amount range calculation unit 44.

In setting the range of the defect feature amount and the range of the non-defect feature amount, the defect point of the object T to be a sample used for this setting is detected in advance by an inspection performed by the operator, for example. The inspection in this case is performed by a visual inspection or examination by touch as in the related art, for example. The defect detection system 1 then creates the original image A1 of the object T, that is, the original image for learning with the original image creation unit 10. The image processing unit 22 performs the image processing described above using the original image for learning as the original image A1, and extracts the candidate region P1, the defect candidate region P2, and the defect candidate extraction region P3 of the original image for learning. The image processing unit 22 calculates the feature amount of the defect candidate extraction region P3 of the original image for learning. The object T used as a sample is preferably the same part of an aircraft component as the object T the defect of which is actually detected, but may be a different part of an aircraft component.

The feature amount acquisition unit 40 acquires the feature amount of the original image for learning calculated by the image processing unit 22, and information (positional information) about the defect candidate extraction region P3 having the feature amount. The defect information acquisition unit 42 acquires information about the defect point of the object T the original image for learning of which is taken. The information about the defect point is information indicating the defect point that has been detected in advance for the actual object T to be a sample, and indicates a position of the defect in the object T. Additionally, the information about the defect point corresponds to information of a label indicating whether the point is actually the defect or is not the defect.

The feature amount range calculation unit 44 compares the positional information of the defect candidate extraction region P3 acquired by the feature amount acquisition unit 40 with the information about the defect point acquired by the defect information acquisition unit 42 to determine whether the extracted defect candidate extraction region P3 is actually the defect. The defect candidate extraction region P3 extracted by the image processing unit 22 is a region to be a candidate for the defect point, but there is a possibility that the defect candidate extraction region P3 is not actually the defect point. The feature amount range calculation unit 44 determines whether the defect candidate extraction region P3 is actually the defect based on the information about the defect point. The feature amount range calculation unit 44 determines whether the defect candidate extraction region P3 is the defect for all of the defect candidate extraction regions P3. The feature amount range calculation unit 44 calculates the range of the defect feature amount based on the feature amount of the defect candidate extraction region P3 that is determined to be the defect. The feature amount range calculation unit 44 calculates the range of the non-defect feature amount based on the feature amount of the defect candidate extraction region P3 that is determined not to be the defect. That is, the feature amount range calculation unit 44 previously learns a numerical range of the feature amount with which the defect can be found based on the information about the defect point (that is, labels the feature amount as a defect or a non-defect). The number of objects T used for learning is preferably plural, for example, 30 or more. The feature amount range calculation unit 44 determines whether the defect candidate extraction region P3 is the defect point for all of the objects T used for learning, and calculates the range of the defect feature amount and the range of the non-defect feature amount using all determination results.

The following describes the range of the defect feature amount and the range of the non-defect feature amount in more detail. In the following description, the feature amount of the defect candidate extraction region P3 determined to be the defect is assumed to be a feature amount D1, and the feature amount of the defect candidate extraction region P3 determined not to be the defect is assumed to be a feature amount D2. The feature amount range calculation unit 44 calculates a range E1 of the defect feature amount based on feature amounts D1 of the defect candidate extraction regions P3. The feature amount range calculation unit 44 calculates the range E1 of the defect feature amount so that all of the feature amounts D1 fall within the range E1 of the defect feature amount. Similarly, the feature amount range calculation unit 44 calculates a range E2 of the non-defect feature amount based on feature amounts D2 of the defect candidate extraction regions P3. The feature amount range calculation unit 44 calculates the range E2 of the non-defect feature amount so that all of the feature amounts D2 fall within the range E2 of the non-defect feature amount. More specifically, the feature amount range calculation unit 44 calculates the range E1 of the defect feature amount based on a numerical range from a minimum value to a maximum value of the feature amounts D1, and calculates the range E2 of the non-defect feature amount based on a numerical range from a minimum value to a maximum value of the feature amounts D2. For example, the feature amount range calculation unit 44 may cause a numerical range from the smallest value (minimum value) to the largest value (maximum value) of the feature amounts D1 to be the range E1 of the defect feature amount, and may cause a numerical range enlarged by adding a predetermined margin to the numerical range from the minimum value to the maximum value to be the range E1 of the defect feature amount. In other words, the feature amount range calculation unit 44 may connect the feature amounts D1 to specify a region encompassing all of the feature amounts D1, and may cause the region to be the range E1 of the defect feature amount. The feature amount range calculation unit 44 may determine a region encompassing all of the feature amounts D1 to be a standard, and may cause a region that is enlarged corresponding to a certain distance from the region and in which a connecting line is smoothly drawn to be the range E1 of the defect feature amount. Alternatively, the feature amount range calculation unit 44 may set ranges for the respective feature amounts D1 using each one of the feature amounts D1 as a standard, and may cause a range including all of the ranges to be the range E1 of the defect feature amount. The range E2 of the non-defect feature amount can also be calculated using the same method except that the feature amount D2 is used instead of the feature amount D1.

FIG. 10 is a diagram for explaining the range of the defect feature amount and the range of the non-defect feature amount. FIG. 10 is a graph representing a HOG feature amount space. More specifically, the HOG feature amount as a feature amount has a plurality of parameters (values) for each dimension. In this case, the feature amount range calculation unit 44 compares the feature amounts of the same dimension from the defect candidate extraction regions P3, and calculates the range E1 of the defect feature amount and the range E2 of the non-defect feature amount for one dimension based on the numerical range from a maximum value to a minimum value of the feature amounts. The feature amount range calculation unit 44 calculates the range E1 of the defect feature amount and the range E2 of the non-defect feature amount for all dimensions. The feature amount range calculation unit 44 connects, by an approximate line, outer circumferences of regions of the ranges E1 of the defect feature amount for respective dimensions to form a multidimensional closed region, and calculates the closed region as an actual range E1 of the defect feature amount. Similarly, the feature amount range calculation unit 44 connects, by an approximate line, outer circumferences of ranges E2 of the non-defect feature amount of the respective dimensions to form a multidimensional closed region, and calculates the closed region as an actual range E2 of the non-defect feature amount. As illustrated in FIG. 10, the numerical range that may be taken by the feature amount includes numerical values that do not fall within any of the range E1 of the defect feature amount and the range E2 of the non-defect feature amount. A method of calculating the range of the defect feature amount and the range of the non-defect feature amount is not limited to the above description, and the shapes of the range E1 of the defect feature amount and the range E2 of the non-defect feature amount in FIG. 10 are merely examples, and are not limited thereto.

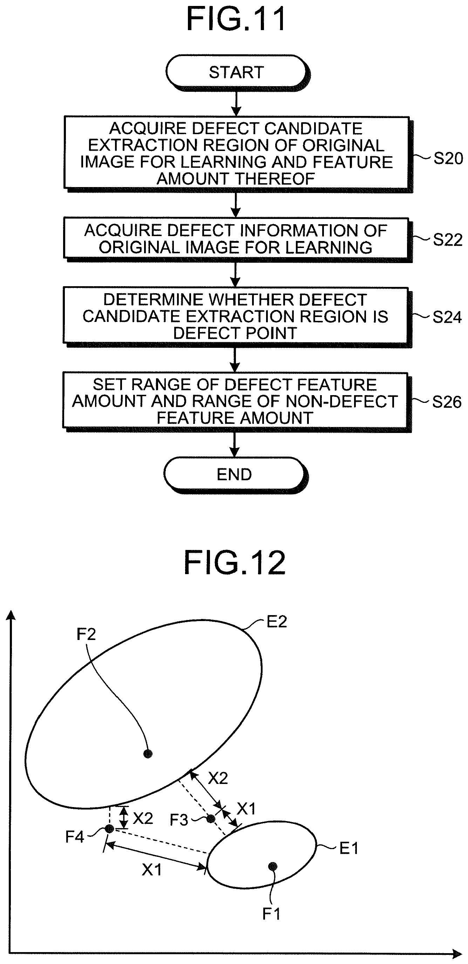

In this way, the feature amount range setting unit 24 sets the range of the defect feature amount and the range of the non-defect feature amount using the original image for learning. The following describes a procedure of setting processing for the range of the defect feature amount and the range of the non-defect feature amount (feature amount range setting step) described above based on a flowchart. FIG. 11 is a flowchart for explaining setting processing for the range of the defect feature amount and the range of the non-defect feature amount. In setting the range of the defect feature amount and the range of the non-defect feature amount, the defect point of the object T to be a sample used for setting is detected in advance, and the original image A1, that is, the original image for learning of the object T is created. The image processing unit 22 performs image processing on the original image for learning as the original image A1, extracts the defect candidate extraction region P3, and calculates the feature amount thereof. As illustrated in FIG. 11, the feature amount range setting unit 24 acquires, from the image processing unit 22, the defect candidate extraction region P3 of the original image for learning and the feature amount thereof with the feature amount acquisition unit 40 (Step S20). The feature amount range setting unit 24 then acquires information about the defect point detected in advance with the defect information acquisition unit 42 (Step S22). A processing order of Step S20 and Step S22 is optional.

The feature amount range setting unit 24 compares the defect candidate extraction region P3 with the information about the defect point using the feature amount range calculation unit 44 to determine whether the defect candidate extraction region P3 is the defect point (Step S24). After determining the defect point, the feature amount range setting unit 24 sets the range of the defect feature amount and the range of the non-defect feature amount with the feature amount range calculation unit 44 (Step S26). Accordingly, this processing ends. In the present embodiment, the feature amount range calculation unit 44 determines whether the defect candidate extraction region P3 is the defect point. However, the feature amount range setting unit 24 does not necessarily perform determination by itself so long as the feature amount range setting unit 24 acquires the information about whether the defect candidate extraction region P3 is the defect point. For example, the operator may cause the display unit 14 to display the defect candidate extraction image A3 (refer to FIG. 8) to determine whether the defect candidate extraction region P3 is the defect point while referring to the information about the defect point. The operator may input a determination result thereof, and the feature amount range setting unit 24 may acquire the determination result.

### Defect detection unit

Next, the following describes the defect detection unit 26 illustrated in FIG. 2. The defect detection unit 26 determines whether the defect candidate extraction region P3 in the target original image is the defect point with an algorithm utilizing artificial intelligence based on the feature amount, the range E1 of the defect feature amount, and the range E2 of the non-defect feature amount calculated by the image processing unit 22 for the target original image. That is, the defect detection unit 26 detects the defect point of the object T using the range E1 of the defect feature amount and the range E2 of the non-defect feature amount calculated through learning performed by the feature amount range setting unit 24. Specifically, as illustrated in FIG. 2, the defect detection unit 26 includes a feature amount acquisition unit 50, a feature amount range acquisition unit 52, and a defect determination unit 54.

In detecting the defect point, the defect detection system 1 previously creates the original image A1, that is, the target original image of the object T as a detection target with the original image creation unit 10. The defect detection system 1 then performs the image processing described above on the target original image as the original image A1 with the image processing unit 22, and extracts the candidate region P1, the defect candidate region P2, and the defect candidate extraction region P3 of the determination image. The image processing unit 22 calculates the feature amount of the defect candidate extraction region P3 of the determination image.

The feature amount acquisition unit 50 acquires the feature amount of the defect candidate extraction region P3 in the determination image calculated by the image processing unit 22, and information (positional information) of the defect candidate extraction region P3 having the feature amount. The positional information means information indicating a position occupied by the defect candidate extraction region P3 in the image. In the following description, the feature amount of the determination image calculated by the image processing unit 22 is referred to as a target feature amount. The feature amount range acquisition unit 52 acquires information about the range E1 of the defect feature amount and the range E2 of the non-defect feature amount from the feature amount range setting unit 24.

The defect determination unit 54 determines whether the defect candidate extraction region P3 in the target original image is the defect point based on the target feature amount, the range E1 of the defect feature amount, and the range E2 of the non-defect feature amount. The defect determination unit 54 determines whether the defect candidate region P2 is the defect point based on a defect difference value X1 and a non-defect difference value X2. The defect difference value X1 is a difference value between the target feature amount and the range E1 of the defect feature amount, and the non-defect difference value X2 is a difference value between the target feature amount and the range E2 of the non-defect feature amount. More specifically, in a case in which a ratio of the defect difference value X1 to the non-defect difference value X2 is equal to or smaller than a predetermined threshold K, the defect determination unit 54 determines that the defect candidate extraction region P3 is the defect point. The threshold K is a coefficient set in advance, and can be set to be an optional value. The threshold K is preferably a value larger than 1. Due to this, the defect determination unit 54 can enhance a possibility of determining the defect, and can reduce a risk that the defect is not detected. The defect determination unit 54 determines whether the defect candidate extraction region P3 is the defect point for all of the defect candidate extraction regions P3 in the determination image. The defect determination unit 54 sets the same threshold K for all of the defect candidate extraction regions P3. The defect determination unit 54 does not necessarily set the threshold K for the ratio of the defect difference value X1 to the non-defect difference value X2, and may set a threshold for determining the defect and perform defect determination based on the target feature amount, the range E1 of the defect feature amount, the range E2 of the non-defect feature amount, and the threshold thereof. Also in this case, the defect determination unit 54 preferably sets the threshold so that a possibility of determining that the region is the defect is higher than a possibility of determining that the region is not the defect.

FIG. 12 is a diagram for explaining defect determination. FIG. 12 is a graph representing the HOG feature amount space. In FIG. 12, target feature amounts F1, F2, F3, and F4 are examples of target feature amounts of the defect candidate extraction regions P3 different from each other. The determination feature amount F1 is a value falling within the range E1 of the defect feature amount, so that the defect determination unit 54 determines that the defect candidate extraction region P3 corresponding to the target feature amount F1 is the defect point. The target feature amount F2 is a value falling within the range E2 of the non-defect feature amount, so that the defect determination unit 54 determines that the defect candidate extraction region P3 corresponding to the target feature amount F2 is not the defect point. The target feature amount F3 does not fall within the range E1 of the defect feature amount and the range E2 of the non-defect feature amount. However, regarding the target feature amount F3, the ratio of the defect difference value X1 to the non-defect difference value X2 is a value equal to or smaller than the threshold K. Thus, the defect determination unit 54 determines that the defect candidate extraction region P3 corresponding to the target feature amount F3 is the defect point. The target feature amount F4 also does not fall within the range E1 of the defect feature amount and the range E2 of the non-defect feature amount. However, regarding the target feature amount F4, the ratio of the defect difference value X1 to the non-defect difference value X2 is a value larger than the threshold K. Thus, the defect determination unit 54 determines that the defect candidate extraction region P3 corresponding to the target feature amount F4 is not the defect point. In the example of FIG. 12, the defect difference value X1 is assumed to be a minimum value of a difference (minimum distance) between the target feature amount and the range E1 of the defect feature amount, that is, a difference value between the target feature amount and the range E1 of the defect feature amount closest to the target feature amount. However, the defect difference value X1 is not limited thereto, and may be a difference value between the target feature amount and an optional value falling within the range E1 of the defect feature amount. For example, the defect difference value X1 may be a difference between the target feature amount and a median of the range E1 of the defect feature amount. The same applies to the non-defect difference value X2.

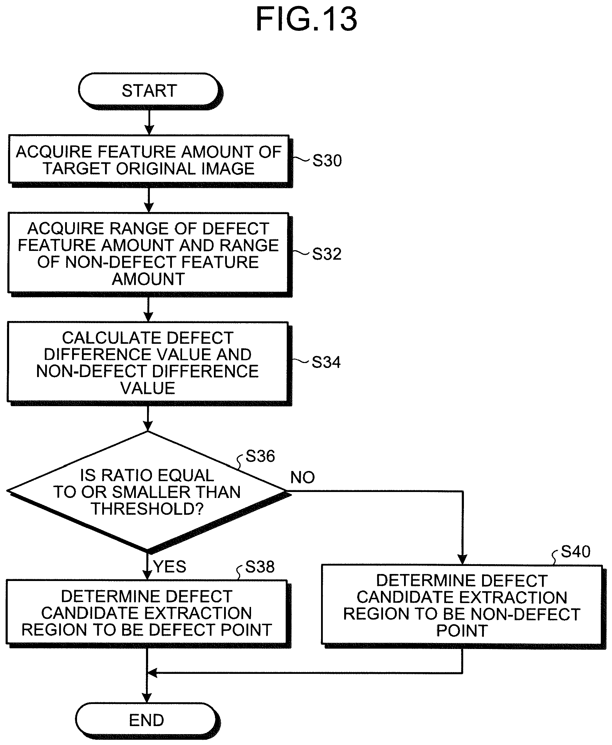

In this way, the defect detection unit 26 compares the target feature amount with the range of the defect feature amount and the range of the non-defect feature amount to determine whether the defect candidate extraction region P3 of the target original image is the defect point. The following describes a procedure of determination processing for the defect (defect detection step) described above based on a flowchart. FIG. 13 is a flowchart for explaining defect detection processing. In detecting the defect, the defect detection system 1 previously creates, with the original image creation unit 10, the original image A1, that is, the target original image of the object T the defect of which is detected. The defect detection system 1 then performs image processing on the target original image with the image processing unit 22, extracts the defect candidate extraction region P3, and calculates the feature amount thereof. As illustrated in FIG. 13, the defect detection unit 26 acquires the feature amount of the target original image (target feature amount) from the image processing unit 22 with the feature amount acquisition unit 50 (Step S30), and acquires the information about the range E1 of the defect feature amount and the range E2 of the non-defect feature amount from the feature amount range setting unit 24 with the feature amount range acquisition unit 52 (Step S32).

The defect detection unit 26 calculates the defect difference value X1 and the non-defect difference value X2 of the defect candidate extraction region P3 in the target original image with the defect determination unit 54 (Step S34). After calculating the defect difference value X1 and the non-defect difference value X2, the defect detection unit 26 determines whether the ratio of the defect difference value X1 to the non-defect difference value X2 is equal to or smaller than the threshold K with the defect determination unit 54 (Step S36). If the ratio is equal to or smaller than the threshold K (Yes at Step S36), the defect determination unit 54 determines that the defect candidate extraction region P3 is the defect point (Step S38). If the ratio is not equal to or smaller than the threshold K (No at Step S36), that is, if the ratio is larger than the threshold K, the defect determination unit 54 determines that the defect candidate extraction region P3 is not the defect point (Step S40). The defect determination unit 54 performs such processing for all of the defect candidate extraction regions P3, and determines whether each of the defect candidate extraction regions P3 is the defect point. Accordingly, this processing ends.

### Determination result display

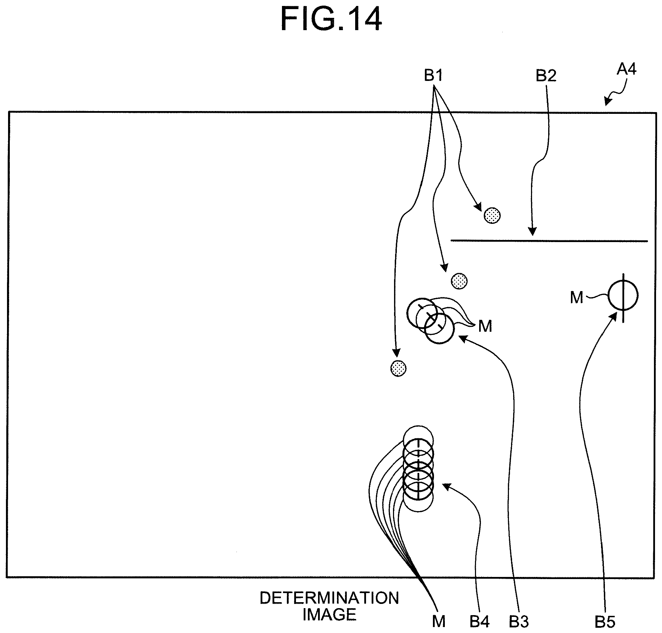

After determining whether the defect candidate extraction region P3 is the defect point, the image display control unit 28 illustrated in FIG. 2 causes the display unit 14 to display a determination image A4 as an image indicating a determination result. FIG. 14 is a diagram illustrating an example of the determination image. As illustrated in FIG. 14, the determination image A4 is an image obtained by adding a mark M to the original image A1. The mark M is a mark displayed at a point that is determined to be the defect point by the defect detection unit 26 in the original image A1. Specifically, in the determination image A4, the points B1 to B5 displayed in the original image A1 are displayed. In the determination image A4, marks M are displayed around the points B3 to B5. The point B1 is a region excluded from the defect candidate region P2 due to its circular shape. The point B2 is a region that is determined not to be the defect point because a difference between the defect difference value X1 and the non-defect difference value X2 is not equal to or smaller than the threshold K. Thus, the mark M is not displayed at the point B1 and the point B2.

More specifically, the mark M is displayed for each of the defect candidate extraction regions P3 determined to be the defect points. Each of the point B2 and the point B5 includes only one defect candidate extraction region P3, so that one mark M is displayed for each one of them. On the other hand, each of the point B3 and the point B4 includes a plurality of the defect candidate extraction regions P3, so that the marks M are displayed corresponding to the number of the defect candidate extraction regions P3. The mark M is a circular mark constituted of a frame line forming a circle. The mark M is displayed to surround the defect candidate extraction region P3 determined to be the defect point with this circular frame line. A region surrounded by the frame line may preferably have a predetermined area with respect to one defect candidate region P3, for example. The mark M is not displayed in an inner region of the frame line as an outer circumference, so that the defect point inside the frame line can be visually recognized. However, the mark M is not limited thereto, and may have an optional shape such as a rectangular shape. The image display control unit 28 causes the determination image A4 to be displayed such that display of the mark M varies depending on the ratio of the defect difference value X1 to the non-defect difference value X2. That is, the image display control unit 28 varies display of the mark M for the defect candidate extraction region P3 having a different ratio. In the example of FIG. 14, the image display control unit 28 varies a color of the frame line as the outer circumference of the mark M depending on the ratio of the defect difference value X1 to the non-defect difference value X2. Due to this, the operator can visually recognize the point having a high ratio and a high possibility of the defect more suitably.

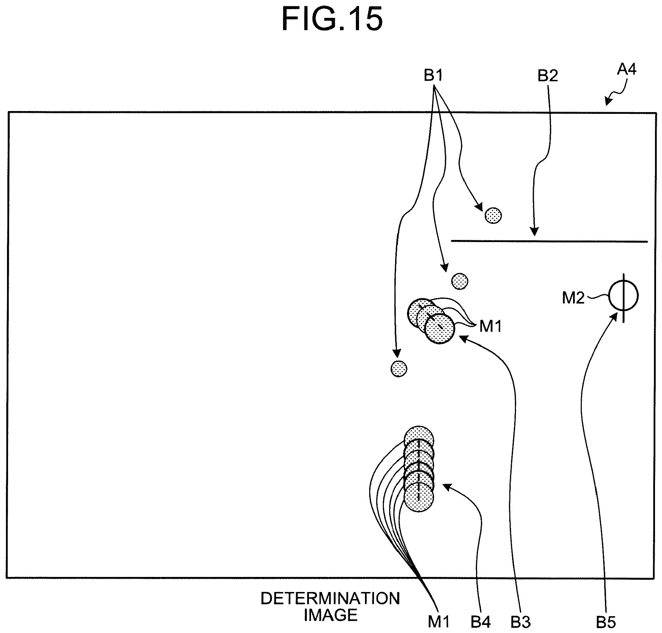

FIG. 15 is a diagram illustrating another example of the determination image. As illustrated in FIG. 15, in a case in which the marks M are superimposed on each other, the image display control unit 28 may cause display of the superimposed marks M to be different from display of the mark M that is not superimposed on the other mark. In the example of FIG. 15, the marks M1 displayed for the defect candidate extraction region P3 at the point B3 are superimposed on each other. Similarly, the marks M1 displayed for the defect candidate extraction region P3 at the point B4 are superimposed on each other. The image display control unit 28 causes a predetermined color to be displayed in an inner region of the marks M1 superimposed on each other. This color is optional, but is preferably a semitransparent color (a color that can transmit visible light at a processing ratio) so that the defect point displayed in the region can be visually recognized. In the example of FIG. 15, the mark M2 displayed for the points B2 and B5 is not superimposed on the other mark. Thus, the predetermined color is not displayed in the inner region of the mark M2. However, display of the superimposed marks M is not limited thereto and is optional, and it is sufficient that the display of the superimposed marks M is different from display of the mark M that is not superimposed on the other mark.

As described above, the defect detection system 1 according to the present embodiment is a system that detects the defect of the aircraft component as the object T, and includes the original image acquisition unit 20, the image processing unit 22, the feature amount range setting unit 24, and the defect detection unit 26. The original image acquisition unit 20 acquires the original image A1. The original image A1 is an image of the object T including the image of the defect point. The image processing unit 22 extracts, from the original image A1, the defect candidate region P2 as a region of the candidate for the defect point based on luminance of the image in the original image A1. The image processing unit 22 calculates the feature amount of the defect candidate region P2 based on a difference in luminance in the defect candidate extraction region P3 (between the defect candidate region P2 and the surrounding regions thereof). The feature amount range setting unit 24 associates information about the defect point with the feature amount calculated by the image processing unit 22 for the original image for learning, and sets the range E1 of the defect feature amount and the range E2 of the non-defect feature amount. The original image for learning is the original image A1 the defect point of which is detected in advance. The range E1 of the defect feature amount is a range of the feature amount for determining a region to be the defect, and the range E2 of the non-defect feature amount is a range of the feature amount for determining a region not to be the defect. The defect detection unit 26 determines whether the defect candidate region in the target original image is the defect point based on the feature amount calculated by the image processing unit 22 for the target original image, the range E1 of the defect feature amount, and the range E2 of the non-defect feature amount. The target original image is the original image A1 the defect point of which is not detected yet.

In the defect detection system 1, the image processing unit 22 performs image processing on the original image A1 to extract the defect candidate region P2 as a candidate for the defect. The image processing unit 22 then calculates the feature amount as a parameter of luminance intensity for the defect candidate region P2. That is, the image processing unit 22 limits the calculation target for the feature amount to only the defect candidate region P2. The feature amount range setting unit 24 sets the range of the defect feature amount and the range of the non-defect feature amount based on the feature amount of the defect candidate region P2 extracted from the original image for learning. That is, the feature amount range setting unit 24 sets a standard in advance indicating a certain feature amount with which a defect is determined. The defect detection unit 26 compares the feature amount of the defect candidate region P2 extracted from the target original image with this standard (the range of the defect feature amount and the range of the non-defect feature amount) to determine whether the defect candidate region P2 extracted from the target original image is the defect point. The defect detection system 1 detects the defect based on the feature amount of the original image A1, so that variation in detection accuracy can be suppressed. The defect detection system 1 previously learns the range of the feature amount as a standard of the defect (the range of the defect feature amount and the range of the non-defect feature amount) using the original image for learning. The defect detection system 1 detects the defect based on the range of the feature amount, so that detection accuracy can be improved. The defect detection system 1 assumes the parameter for determining the defect to be the feature amount, and limits the calculation target for the feature amount to only the defect candidate region P2. Thus, the defect detection system 1 can shorten the detection time by suppressing an excessive increase in a calculation amount for defect detection and suppressing a load of defect detection. In this way, with the defect detection system 1, the defect of the aircraft component can be appropriately detected.

The image processing unit 22 includes the candidate region extraction unit 30, the defect candidate region extraction unit 32, and the feature amount calculation unit 34. The candidate region extraction unit 30 extracts, as the defect candidate region P1, the region having variance of luminance with respect to the surrounding regions that is equal to or larger than the predetermined variance value from among the regions in the original image A1. The defect candidate region extraction unit 32 removes the candidate region P1 forming a predetermined shape determined in advance from among the candidate regions P1, and extracts, as the defect candidate region P2, the candidate region P1 that is not removed. The feature amount calculation unit 34 calculates the feature amount of the defect candidate region P2 based on a difference in luminance between the defect candidate region P2 and the surrounding regions thereof. The image processing unit 22 extracts, as the candidate region P1, the region having large variance of luminance with respect to the surrounding region. The region having large variance can be considered to be a region having a large difference in luminance with respect to the surrounding regions, so that the image processing unit 22 extracts, as the candidate region P1 for calculating the feature amount, only a region having a large difference in luminance and a high possibility of the defect. The image processing unit 22 assumes the region in which a member such as a rivet is arranged in the object T not to be the defect, and excludes the region from the defect candidate region P2 for calculating the feature amount. Due to this, the defect detection system 1 can more suitably prevent a calculation amount for defect detection from being excessively increased, and can detect the defect of the aircraft component more appropriately.

The defect candidate region extraction unit 32 determines whether the continuous candidate regions P1 form a circular shape using Hough transform, and removes the candidate regions P1 forming a circular shape. A circular member such as a rivet is often attached to the aircraft component. By assuming the regions forming a circular shape not to be the defect and excluding the regions, the defect detection system 1 can more suitably prevent a calculation amount for defect detection from being excessively increased, and can detect the defect of the aircraft component more appropriately.

The feature amount calculation unit 34 calculates the feature amount as a variation amount of luminance in the defect candidate extraction region P3 (the defect candidate region P2 and the surrounding regions thereof). The defect detection system 1 assumes the variation amount of luminance in the surrounding regions to be the feature amount, and determines whether the region is the defect based on the feature amount. At the defect point, the variation amount of luminance in the surrounding region is large. Thus, the defect detection system 1 can appropriately improve accuracy in defect detection by determining the defect based on the feature amount.

The feature amount calculation unit 34 calculates, as the feature amount, the HOG feature amount calculated from the defect candidate region P2 and the surrounding regions. The defect detection system 1 assumes the HOG feature amount to be the feature amount, so that a variation amount of luminance in the surrounding region can be specified for each direction of luminance gradient (variation amount) to determine whether the region is the defect. Accordingly, the defect detection system 1 can improve accuracy in defect detection more appropriately.

The defect detection unit 26 includes the feature amount acquisition unit 50 and the defect determination unit 54. The feature amount acquisition unit 50 acquires the target feature amount as the feature amount of the target original image. The defect determination unit 54 determines whether the defect candidate region P2 is the defect point based on the defect difference value X1 and the non-defect difference value X2. The defect difference value X1 is a difference value between the target feature amount and the range of the defect feature amount. The non-defect difference value X2 is a difference value between the target feature amount and the range of the non-defect feature amount. The defect detection system 1 determines whether the region is the defect based on a difference value between the target feature amount and a standard value (range of the defect feature amount) indicating whether the region is the defect calculated in advance, so that accuracy in defect detection can be improved more appropriately.

In a case in which a ratio of the defect difference value X1 to the non-defect difference value X2 is equal to or smaller than the predetermined threshold K, the defect determination unit 54 determines that the defect candidate region P2 is the defect point. The defect detection system 1 determines the defect based on the ratio of the defect difference value X1 to the non-defect difference value X2, so that accuracy in defect detection can be improved more appropriately. For example, even when the target feature amount does not fall within any of the range of the defect feature amount and the range of the non-defect feature amount, the defect detection system 1 can determine the defect based on the ratio to appropriately determine whether the defect candidate region P2 having the target feature amount is the defect point.

The predetermined threshold K is a value larger than 1. Typically, the number of defect points is smaller than the number of non-defect points. Thus, also in the original image for learning used for learning, the number of defect candidate regions P2 determined to be the defect is smaller than the number of defect candidate regions P2 determined not to be the defect. Due to this, a numerical range of the range of the defect feature amount tends to be narrower than that of the range of the non-defect feature amount. On the other hand, the defect detection system 1 causes the threshold K to be larger than 1 to increase a possibility that the region is determined to be the defect in detecting the defect, and improve accuracy in defect detection more appropriately.

The defect detection system 1 further includes the image display control unit 28. The image display control unit 28 causes the display unit 14 to display the determination image A4. The determination image A4 is an image obtained by adding the mark M to the original image A1. The mark M is displayed at a point that is determined to be the defect point by the defect detection unit 26 in the original image A1. With the defect detection system 1, by displaying the image obtained by adding the mark M to the point determined to be the defect, the operator is enabled to easily visually recognize the defect point.

The image display control unit 28 causes the determination image A4 to be displayed such that display of the mark M is different depending on the ratio of the defect difference value X1 to the non-defect difference value X2. A point at which the ratio of the defect difference value X1 to the non-defect difference value X2 is high may be the defect with high possibility. The image display control unit 28 varies display of the mark M depending on the ratio to enable the operator to easily visually recognize the point having a high possibility of the defect.

The defect detection system 1 also includes the original image creation unit 10 that creates the original image A1. In the present embodiment, the original image creation unit 10 takes an image of the surface T1 of the object T to create the original image A1. By performing defect detection using the original image A1, the defect detection system 1 can appropriately detect the defect on the surface T1 of the object T.

However, the defect detection system 1 can detect not only the defect on the surface T1 of the object T but also the internal defect of the object T. In this case, the original image creation unit 10 detects an internal state (discontinuity of the inner part) of the object T, and creates the original image A1 based on detection data thereof. Due to this, the defect detection system 1 can appropriately detect the internal defect of the object T. For example, the original image creation unit 10 includes an ultrasonic flaw detector, and emits ultrasonic waves to the object T while changing an emitting position. The original image creation unit 10 measures reflected waves at respective positions. The original image creation unit 10 creates, as the original image A1, an image obtained by varying luminance for each intensity distribution of the reflected waves to be plotted in a two-dimensional matrix for each position. The original image A1 is a two-dimensional image including the defect point of the inner part of the object T. In this case, the original image creation unit 10 may acquire reflected waves, and the control unit 12 may create the original image based on the reflected waves.

Even in a case of using the original image including the defect point of the inner part of the object T, control by the control unit 12 such as image processing is the same as that for the original image obtained by taking the image of the surface T1. In a case of using this original image, the defect detection system 1 can appropriately detect an internal defect. A method of detecting the internal state of the object T is not limited to an ultrasonic flaw inspection, and an optional nondestructive inspection method can be applied such as a liquid penetrant inspection. In this way, the defect detection system 1 can detect the defect on the surface by using the original image using the defect on the surface, and can detect the internal defect by using the original image using the internal defect.

### Second embodiment

Next, the following describes a second embodiment. The defect detection system 1 according to the second embodiment is different from that in the first embodiment in that a true/false teaching unit 60 is included therein. Description about points of the second embodiment that are the same as those of the first embodiment will not be repeated herein.

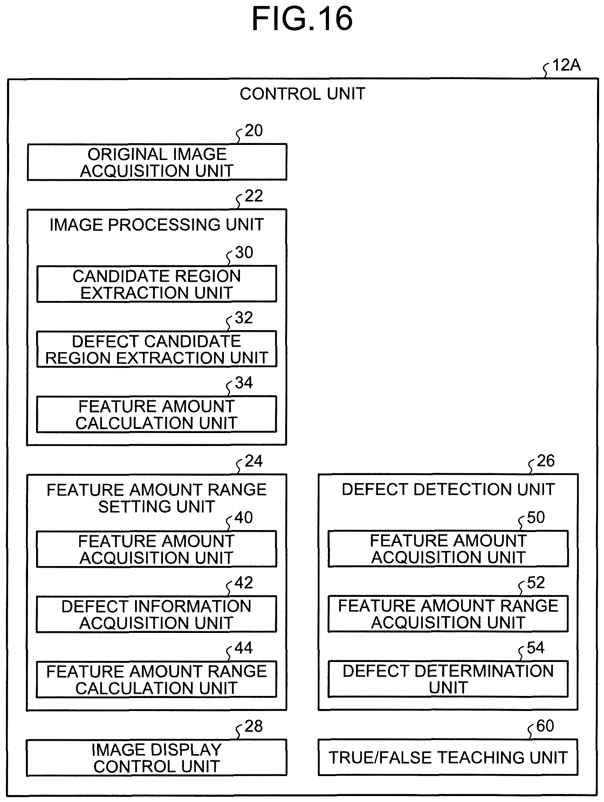

FIG. 16 is a schematic block diagram of a control unit according to the second embodiment. As illustrated in FIG. 16, a control unit 12A according to the second embodiment includes the true/false teaching unit 60. The true/false teaching unit 60 compares a detection result obtained by the defect detection unit 26 for the object T the defect of which is not detected yet with a detection result of the defect that is detected for the object T in another inspection. The true/false teaching unit 60 transmits (teaches), to the feature amount range setting unit 24, true or false of a comparison result thereof, that is, whether the detection result obtained by the defect detection unit 26 is true or false. The feature amount range setting unit 24 sets the range of the defect feature amount and the range of the non-defect feature amount again based on that true/false information.

Specifically, the true/false teaching unit 60 acquires, from the defect detection unit 26, a detection result of the defect point (positional information of the defect point) of the object T the defect of which has not been detected yet. At this point, the defect point of the object T is detected through another inspection. This another inspection is performed by the operator, for example, through a visual inspection or examination by touch in the related art. The operator inputs, to the control unit 12A, the detection result of the defect point (positional information of the defect point) with the input unit 16. The true/false teaching unit 60 acquires the detection result of the defect point.

In this case, the detection result of the defect point acquired from the defect detection unit 26, that is, the positional information of the defect point detected by the defect detection unit 26 is assumed to be a defect detection position. The detection result of the defect point acquired in the other inspection, that is, the positional information of the defect point detected in the other inspection is assumed to be a defect confirmation position. The true/false teaching unit 60 compares the defect detection position with the defect confirmation position to determine whether the defect detection position is actually the defect point. If the defect detection position matches the defect confirmation position, the true/false teaching unit 60 determines that the defect detection position is the actual defect point. If the defect detection position does not match the defect confirmation position, the true/false teaching unit 60 determines that the defect detection position is not the actual defect point. In the following description, the defect detection position that is determined not to be the actual defect point is referred to as a non-defect position. In a case in which the defect detection position is not present at a position corresponding to the defect confirmation position, that is, a case in which the defect detection unit 26 does not determine, to be the defect point, the position that is determined to be the defect point in the other inspection, the true/false teaching unit 60 stores information about the defect confirmation position. In the following description, the defect confirmation position that is not determined to be the defect point by the defect detection unit 26 is referred to as an additional defect position.

The true/false teaching unit 60 outputs, to the image processing unit 22, information about the non-defect position and the additional defect position. The image processing unit 22 calculates the feature amount of a region corresponding to the non-defect position and the additional defect position with the feature amount calculation unit 34. In the following description, the feature amount of the non-defect position is assumed to be a non-defect feature amount, and the feature amount of the additional defect position is assumed to be an additional defect feature amount. The feature amount range setting unit 24 acquires the non-defect feature amount and the additional defect feature amount with the feature amount acquisition unit 40. The feature amount range setting unit 24 sets the range of the defect feature amount and the range of the non-defect feature amount again based on the non-defect feature amount and the additional defect feature amount with the feature amount range calculation unit 44. Specifically, the feature amount range calculation unit 44 calculates the range E1 of the defect feature amount based on the additional defect feature amount in addition to the feature amount D1 that is determined to be the defect in the original image for learning. That is, the feature amount range calculation unit 44 calculates the range E1 of the defect feature amount again so that the feature amount D1 and the additional defect feature amount fall within the range E1 of the defect feature amount. Similarly, the feature amount range calculation unit 44 calculates the range E2 of the non-defect feature amount based on the non-defect feature amount in addition to the feature amount D2 that is determined not to be the defect in the original image for learning. That is, the feature amount range calculation unit 44 calculates the range E2 of the non-defect feature amount again so that the feature amount D2 and the non-defect feature amount fall within the range E2 of the non-defect feature amount.

The defect detection unit 26 performs successive defect detection using the range E1 of the defect feature amount and the range E2 of the non-defect feature amount that are calculated again. In this case, the defect detection unit 26 does not change the value of the threshold K and maintains the same value irrespective of the result obtained by the true/false teaching unit 60.

In this way, in the second embodiment, the true/false teaching unit 60 compares the detection result of the defect point from the defect detection unit 26 with the detection result of the defect point obtained by performing another inspection on the same object T. The true/false teaching unit 60 detects a position at which the detection result of the defect point from the defect detection unit 26 does not match the detection result of the defect point obtained through the other inspection (the non-defect position and the additional defect position). The image processing unit 22 calculates the feature amount of this position. The defect detection unit 26 sets the range E1 of the defect feature amount and the range E2 of the non-defect feature amount again based on the calculated feature amount. The defect detection unit 26 performs successive defect detection using the range E1 of the defect feature amount and the range E2 of the non-defect feature amount that are calculated again. In this way, the defect detection system 1 according to the second embodiment updates the range E1 of the defect feature amount and the range E2 of the non-defect feature amount based on a teaching result obtained by the true/false teaching unit 60 (information of the non-defect position and the additional defect position). Due to this, the defect detection system 1 can further improve accuracy in defect detection.

The embodiments of the present invention have been described above. However, the embodiments are not limited thereto. The components described above include a component that is easily conceivable by those skilled in the art, substantially the same component, and what is called an equivalent. The components described above can also be appropriately combined with each other. In addition, the components can be variously omitted, replaced, or modified without departing from the gist of the embodiments described above. Reference Signs List

- 1: DEFECT DETECTION SYSTEM
- 10: ORIGINAL IMAGE CREATION UNIT
- 12: CONTROL UNIT
- 14: DISPLAY UNIT
- 16: INPUT UNIT
- 20: ORIGINAL IMAGE ACQUISITION UNIT
- 22: IMAGE PROCESSING UNIT
- 24: FEATURE AMOUNT RANGE SETTING UNIT
- 26: DEFECT DETECTION UNIT
- 28: IMAGE DISPLAY CONTROL UNIT
- 30: CANDIDATE REGION EXTRACTION UNIT
- 32: DEFECT CANDIDATE REGION EXTRACTION UNIT
- 34: FEATURE AMOUNT CALCULATION UNIT
- 40: FEATURE AMOUNT ACQUISITION UNIT
- 44: FEATURE AMOUNT RANGE CALCULATION UNIT
- 50: FEATURE AMOUNT ACQUISITION UNIT
- 52: FEATURE AMOUNT RANGE ACQUISITION UNIT
- 54: DEFECT DETERMINATION UNIT
- A1: ORIGINAL IMAGE
- T: OBJECT
- P: PIXEL
- P1: CANDIDATE REGION
- P2: DEFECT CANDIDATE REGION
- P3: DEFECT CANDIDATE EXTRACTION REGION

## Claims

1. A defect detection system for an aircraft component to detect a defect of the aircraft component as an object, the defect detection system comprising:
an original image acquisition unit configured to acquire an original image which is an image of the object including an image of a defect point;
an image processing unit configured to extract, from the original image, a defect candidate region which is a region to be a candidate for the defect point based on luminance of the image in the original image, and calculate a feature amount of the defect candidate region based on a difference in luminance between the defect candidate region and surrounding regions;
a feature amount range setting unit configured to associate the feature amount calculated by the image processing unit for an original image for learning in which a defect point is detected in advance, with information about the defect point to set a range of a defect feature amount which is a range of the feature amount for determining a region to be the defect or a range of a non-defect feature amount which is a range of the feature amount for determining a region not to be the defect; and
a defect detection unit configured to determine, based on the feature amount calculated by the image processing unit for a target original image in which a defect point is not detected yet, the range of the defect feature amount, and the range of the non-defect feature amount, whether the defect candidate region in the target original image is a defect point.

2. The defect detection system for an aircraft component according to claim 1, wherein
the image processing unit includes
a candidate region extraction unit configured to extract, as a candidate region for the defect, a region having variance of luminance with respect to surrounding regions that is equal to or larger than a predetermined variance value from among regions in the original image;
a defect candidate region extraction unit configured to remove a candidate region forming a predetermined shape determined in advance from among candidate regions, and extract, as the defect candidate region, the candidate region that is not removed; and
a feature amount calculation unit configured to calculate a feature amount of the defect candidate region based on a difference in luminance between the defect candidate region and the surrounding regions.

3. The defect detection system for an aircraft component according to claim 2, wherein the defect candidate region extraction unit determines whether a plurality of the candidate regions continuously arranged form a circular shape using Hough transform, and removes the candidate regions forming the circular shape.

4. The defect detection system for an aircraft component according to claim 2 or 3, wherein the feature amount calculation unit calculates the feature amount as a variation amount of luminance in the defect candidate region and the surrounding regions.

5. The defect detection system for an aircraft component according to claim 4, wherein the feature amount calculation unit calculates a HOG feature amount of the defect candidate region as the feature amount.

6. The defect detection system for an aircraft component according to any one of claims 1 to 5, wherein
the defect detection unit includes
a feature amount acquisition unit configured to acquire a target feature amount which is the feature amount of the target original image;
a feature amount range acquisition unit configured to acquire the range of the defect feature amount and the range of the non-defect feature amount from the feature amount range setting unit; and
a defect determination unit configured to determine whether the defect candidate region is the defect point based on a defect difference value which is a difference value between the target feature amount and the range of the defect feature amount, and a non-defect difference value which is a difference value between the target feature amount and the range of the non-defect feature amount.

7. The defect detection system for an aircraft component according to claim 6, wherein, when a ratio of the defect difference value to the non-defect difference value is equal to or smaller than a predetermined threshold, the defect determination unit determines that the defect candidate region is the defect point.

8. The defect detection system for an aircraft component according to claim 7, wherein the predetermined threshold is a value of larger than 1.

9. The defect detection system for an aircraft component according to any one of claims 5 to 8, further comprising an image display control unit configured to cause a display unit to display a determination image obtained by adding a mark to the original image at a point that is determined to be the defect point by the defect detection unit.

10. The defect detection system for an aircraft component according to claim 9, wherein the image display control unit causes the determination image to be displayed such that display of the mark is different depending on a ratio of the defect difference value to the non-defect difference value.

11. The defect detection system for an aircraft component according to any one of claims 1 to 10, further comprising an original image creation unit configured to take an image of a surface of the object to create the original image.

12. The defect detection system for an aircraft component according to any one of claims 1 to 10, further comprising an original image creation unit configured to detect an internal state of the object to create the original image based on detection data.

13. A defect detection method for an aircraft component to detect a defect of the aircraft component as an object, the defect detection method comprising:
an original image acquisition step of acquiring an original image which is an image of the object including an image of a defect point;
an image processing step of extracting, from the original image, a defect candidate region which is a region to be a candidate for the defect point based on luminance of the image in the original image, and calculating a feature amount of the defect candidate region based on a difference in luminance between the defect candidate region and surrounding regions;
a feature amount range setting step of associating the feature amount calculated at the image processing step for an original image for learning in which a defect point is detected in advance, with information about the defect point to set a range of a defect feature amount which is a range of the feature amount for determining a region to be the defect or a range of a non-defect feature amount which is a range of the feature amount for determining a region not to be the defect; and
a defect detection step of determining, whether the defect candidate region corresponding to the feature amount is a defect point based on the feature amount calculated at the image processing step for a target original image in which a defect point is not detected yet, the range of the defect feature amount, and the range of the non-defect feature amount.
